# EUROPEAN PATENT APPLICATION

(11) **EP 3 293 822 A1**
(43) Date of publication of application: **14.03.2018**
(21) Application number: 16306132.8
(22) Date of filing: 09.09.2016
(51) Int. Cl.: H01Q 13/18, H01Q 9/04, H01Q 21/28, H01Q 1/24

(54) **WIRELESS COMMUNICATION DEVICE WITH CAVITY-BACKED ANTENNA COMPRISING A BENT PATCH OR SLOT**

(71) Applicant: Thomson Licensing, 92130 Issy-les-Moulineaux (FR)
(72) Inventor: MINARD, Philippe, 35576 Cesson Sevigne Cedex (FR); STEYER, Jean-Marie, 35576 Cesson Sevigne Cedex (FR); BERTIN, Jean-Pierre, 35576 Cesson Sevigne Cedex (FR); AUBIN, Anthony, 35576 Cesson Sevigne Cedex (FR)
(74) Representative: Huchet, Anne

(57) **Abstract**

A wireless communication device, comprising a metallic housing (51) integrating at least one cavity-backed antenna. The at least one cavity-backed antenna comprises a bended patch or slot (55, 57) radiating in at least two different directions.

## Description

### 1. FIELD OF THE DISCLOSURE

The present invention relates generally to the field of wireless communication devices comprising a metallic housing (also referred to as "metal casing"). The invention can be integrated into, but is not limited to, home-networking electronic devices, such as Internet gateways, set-top-boxes, routers and smart home devices.

### 2. TECHNOLOGICAL BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Home-networking devices such as Internet gateways, set-top-boxes routers and smart home devices integrate numerous wireless systems in order to offer multiple services and applications. These include different systems complying with various communication standards such as, for example, WiFi, Bluetooth, RF4CE, ZigBee, Zwave. Therefore, the electronic devices tend to integrate more and more antennas while they, at the same time, become smaller. Consequently, integration and coexistence constraints, as well as manufacturing and assembly costs, are increased sensitively.

Conventionally, the casing of such devices is made of plastic materials. The product casing can be realized in metal for different reasons. Metal high-end finishing metal surfaces provide a trendier and more aesthetical product. Better mechanical resistance and sealing capabilities make metal housings interesting for outdoor equipment. Metal casing comes with some advantages such as increased stability due to higher weight, reduced dimensions thanks to the increased robustness of the casing, more efficient thermal management, increased isolation from the noise embedded in the electronic product caused by electronic components, and better handling of Electromagnetic Compatibility (EMC) issues. Such metallic casing is manufactured using for example die casting or machining techniques. However, a complete metal housing prevents radio-frequency (RF) signals from flowing between the external environment and the internal components. Therefore, specific considerations must be taken particularly towards the antenna integration in order to preserve the performances of the wireless communications.

Solutions in the mobile phone industry allow to integrate antennas in a mobile phone with a metal casing. Proposed antenna solutions belong to cavity-backed patch or slot antenna types. However, most of these solutions are integrated on a small form factor device with a limited number of antennas.

For a wireless communication device integrating multiple-input multiple-output (MIMO) WiFi capabilities or embedding multiple wireless communication systems, more than one antenna has to be integrated in the metal housing. Some of following constraints need to be considered to address this goal: a good angular coverage of the whole antenna system in order to minimize the performance (throughput) variations, low RF coupling between antennas and low cost mechanical solution within the context of a metal housing, the first one being particularly difficult to achieve in such a context.

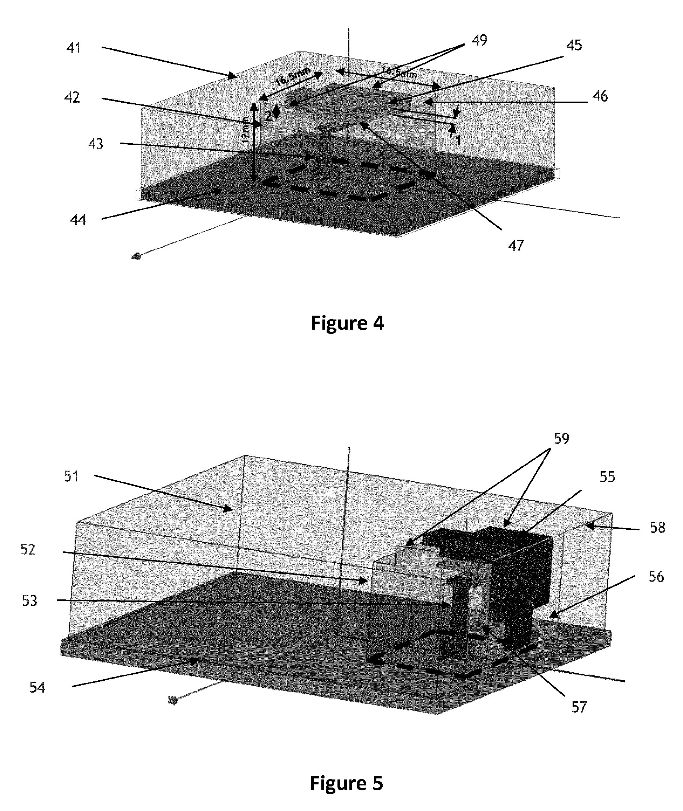

**Figure 4** illustrates a cavity-backed patch antenna integrated in a metal casing, according to the prior art. It comprises a cavity 42 (of substantially parallelepiped shape, in the shown example), a planar patch 45/47 defined by two radiating apertures 49, and an antenna feeder 43 used for coupling the signal between a PCB 44 and the planar patch. More particularly, the planar patch is a planar stacked patch comprising a first planar metallic patch 45 (parasitic patch), which is part of the metal housing 41 (top housing or bottom housing), and a second planar patch 47 (also called driven patch), which is under the parasitic patch. In other words, the planar stacked patch is implemented on a single plane (planar surface) of the housing. The use of a stacked patch allows to increase the impedance frequency bandwidth of the cavity-backed patch antenna. An element of dielectric material 46 (e.g. an over-molded plastic element) is configured for filling the radiating apertures 49 and/or at least part of the cavity 42, thus allowing reducing the electrical length of the radiating apertures. The cavity-backed patch antenna can comprise other elements not shown in figure 4, e.g. spring contacts, foam metal belt or conductive glue belt between the PCB and the metal housing.

However to target 5GHz WiFi antennas, the sizes of the metal casing represent several wavelengths, giving high directivity antennas integrated in the metal casing. This behavior (high directivity antennas) is not suitable, in particular for MIMO applications and lead to high performance (throughput) variations versus angular device positions. Indeed, in order to optimize the wireless performances in the context of a wireless communicating device with metal housing, a MIMO system should use as much as possible non directional antennas to benefit of the multipath richness of the scattering indoor environment.

### 3. SUMMARY

A particular aspect of the present disclosure relates to a wireless communication device, comprising a metallic housing integrating at least one cavity-backed antenna, characterized in that said at least one cavity-backed antenna comprises a bended patch or slot radiating in at least two different directions.

Thus, the present disclosure proposes a new and inventive solution for a cavity-backed antenna integrated in the metallic housing of a wireless communication device. Using a bended patch or a bended slot allows to split the electric field in at least two different directions. The cavity-backed (patch or slot) antenna is therefore less directional than known solutions based on planar patch or slot. The proposed solution is particularly relevant for optimizing the wireless performances in the context of a wireless communication device implementing a MIMO system. Indeed, having antennas of a MIMO system, which are as much as possible non-directional, allows to benefit of the multipath richness of the scattering indoor environment. The proposed solution addresses this issue, in particular to target 5GHz WiFi applications.

According to a particular feature, said bended patch or slot is bended in the middle of the length of said bended patch or slot.

Thus, the bended patch or slot radiates with similar magnitudes in two different directions, this contributing to the objective of obtaining a cavity-backed (patch or slot) antenna as much as possible non-directional.

According to a particular feature, said bended patch or slot is bended according to a substantially right angle or according to a rounded fold.

Thus, the proposed solution can be carried out with wireless communication devices having housings of different shapes.

According to a particular feature, said bended patch or slot extends on two faces of the metallic housing, located on two sides of an edge of the metallic housing.

Thus, the bended patch or slot is easy to integrate to the metallic housing.

According to a particular feature, said at least two different directions comprise at least two orthogonal directions.

Thus, the cavity-backed antenna is as much as possible non-directional.

According to a particular feature, said bended patch or slot is defined by at least one opening having a bended pattern resulting from a bending of a planar pattern belonging to the group comprising: double C shape, I shape, S shape, C shape, inverted C shape and meandered shape.

In other words, the proposed solution can be carried out with many different bended patterns (the above list is not exhaustive).

According to a particular feature, said bended patch or slot is defined by at least one opening filled with a dielectric material.

Thus, the electrical length of the at least one opening (radiating aperture) can be reduced.

According to a particular feature, said metallic housing integrates a plurality of cavity-backed antennas of a multiple-input multiple-output system, each of said plurality of cavity-backed antennas comprising a bended patch or slot radiating in at least two different directions.

As detailed above, the proposed solution is particularly relevant for optimizing the wireless performances in the context of a wireless communication device implementing a MIMO system.

### 4. LIST OF FIGURES

Preferred features of the present disclosure will now be described, by way of nonlimiting example according to particular embodiments, with reference to the accompanying drawings, in which:
- Figure 1A illustrates a perspective view of a wireless communication device according to an embodiment of the present disclosure;
- Figure 1B illustrates the assembly of the different parts of the wireless communication device of figure 1A, comprising the top housing, the spacer, the optional shielding, the printed circuit board and the bottom housing;
- Figures 2A, 2B, 2C and 2D illustrate respectively a perspective view of the top housing, of the spacer, of the printed circuit board and of the bottom housing disclosed in figure 1B;
- Figures 3A, 3B, 3C and 3D illustrate perspective views of wireless communication devices according to different alternate embodiments;
- Figure 4 illustrates a cavity-backed patch antenna integrated in a metal casing, according to the prior art;
- Figure 5 illustrates a cavity-backed patch antenna integrated in a metal casing, according to an embodiment of the present disclosure;
- Figure 6 illustrates a cavity-backed slot antenna integrated in a metal casing, according to an embodiment of the present disclosure;
- Figures 7A and 7B illustrate perspective views of slots according to alternate embodiments of the present disclosure; and
- Figures 8A to 8E illustrate different slot or patch patterns according to alternate embodiments of the present disclosure.

### 5. DETAILED DESCRIPTION

In all of the figures of the present document, the same numerical reference signs designate similar elements.

The general principle of the disclosed solution consists in a wireless communication device comprising a metallic housing integrating at least one cavity-backed antenna which itself comprises a bended patch or slot radiating in at least two different directions.

The proposed solution applies in particular, but not only, when the metallic housing integrates a plurality of cavity-backed antennas of a multiple-input multiple-output (MIMO) system, with each of these cavity-backed antennas comprising a bended patch or slot radiating in at least two different directions.

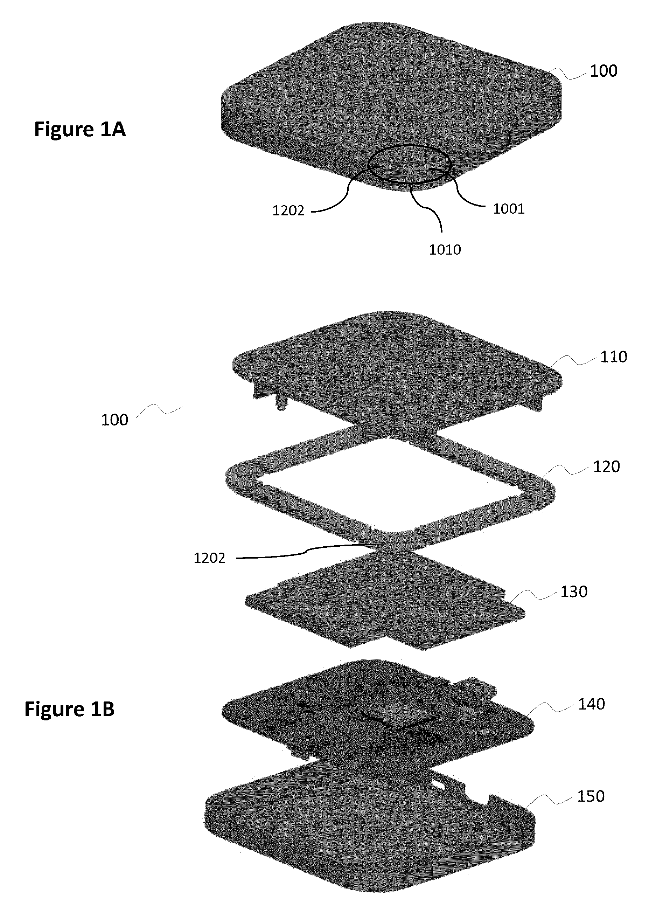

**Figure 1A** illustrates a perspective view of a wireless communication device according to a preferred embodiment. In the preferred embodiment, the device 100 is a set top box. It comprises four 5 GHz antennas for WiFi and one 2.4 GHz antenna for Bluetooth wireless communications, although not illustrated in figure 1A. Connectivity to other devices, such as a television for rendering, is provided through various connectors such as Universal Serial Bus type-C (USB-C) or High-Definition Multimedia Interface (HDMI). The device integrates decoding capabilities of audiovisual signals received either through the wireless communication or through the physical connectors as well as interaction with the user through a user interface. The housing of the device is mainly made of metal, therefore making it challenging to integrate wireless communication capabilities with good performances.

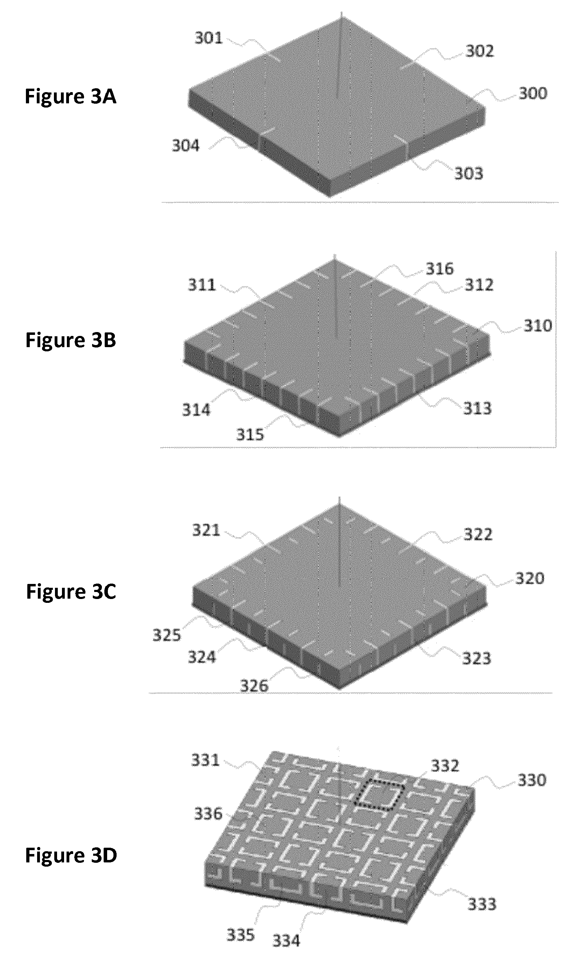

A slot antenna 1010 is present on each of the four corners of the casing of the device 100. As disclosed below in relation with figure 1B, the radiating aperture 1001 of the slot antenna (i.e. the slot itself, in the meaning of the physical slot aperture in the metal casing) is filled with a part 1202 of a spacer (120) made of dielectric material, thus allowing reducing the electrical length of the radiating slot aperture. In other embodiments, slot antennas may be present or added at other locations by creating other apertures. Patch antenna(s) may also be considered in addition or in place of slot antenna(s) as disclosed below in relation with figures 3D, 5 and 8A.

**Figure 1B** illustrates an exploded view showing the assembly of the different parts of the device 100, according to the preferred embodiment. Atop housing 110 is realized in metal, either by using die casting or machining techniques and forms the first part of the cavity backed antenna. A spacer 120 allows to form a gap between the top housing 110 and the bottom housing 150, forming for example a slot type antenna. This spacer is preferably realized in dielectric material (ABS material for example) which reduces the antenna sizes, but can be also an air filled zone which can increase the antenna efficiency. The gap width controls both the antenna bandwidth and efficiency. This mechanical part can be realized by molded injection technique. An optional shielding 130 is soldered or fixed onto a printed circuit board 140 to reduce noise in the device. An optional thermal pad can be applied between an electronic component and one or both metal parts of the housing. The inner sides of the top and / or bottom housing can be mechanically matched in order to reduce the thermal pad height for cost saving reasons. The printed circuit board 140 forms the second part of the cavity backed antenna. In this cavity surface area the printed circuit board comprises at least one conductive layer. A bottom housing 150 is realized in metal, either by using die casting or machining techniques and forms the third part of the cavity backed antenna. The cavities are therefore formed by the assembly of top housing, printed circuit board and bottom housing. Each cavity is linked from RF circuitry to an antenna conductor feeder which is either directly connected with the top and/or the bottom housing forming the (slot) antenna or electromagnetically coupled to the (slot) antenna.

The robustness of the metal housing allows to minimize the size of the housing. In the preferred embodiment, the length and width of the device is around 10 centimeters and the height of the device is less than 2 centimeters.

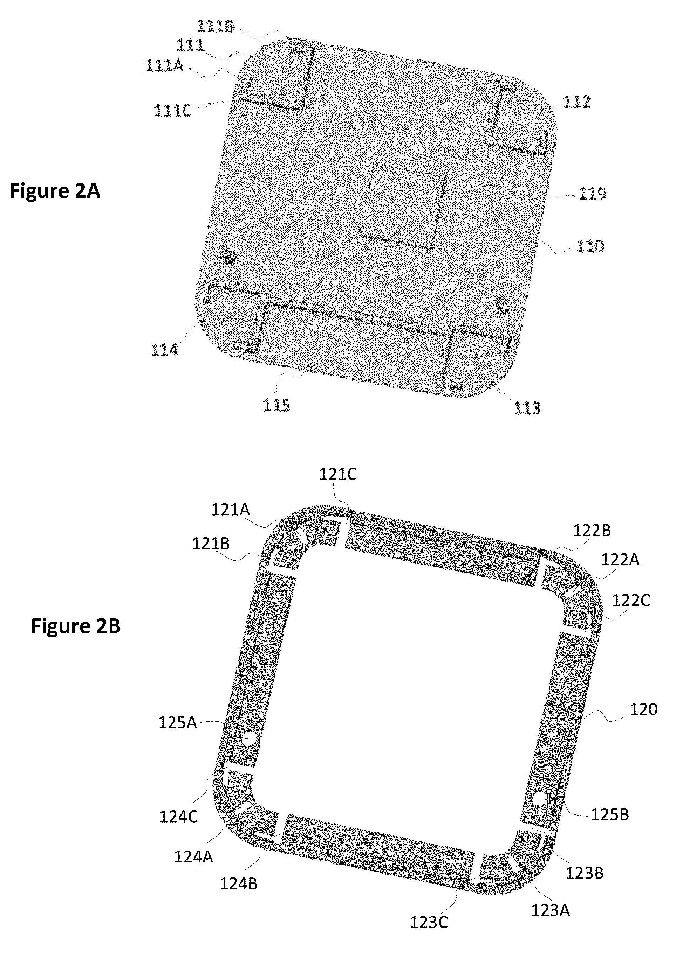

**Figure 2A** illustrates a perspective view of the top housing 110. Areas 111, 112, 113, 114 are representing the cavities of the 5 GHz antennas. Taking the example of cavity 111, the first part of the cavity is formed by the surface of the top housing 110, completed by the side walls 111A, 111B and by the rear wall 111C. These walls are either formed in the top surface or fixed to the top surface as a separate metallic part. In order to enable wide band frequency applications, the quality factor of the cavity should be minimized. The side walls allow the adjustment of the resonating frequency of the cavity backed antenna. The form and dimension of the walls is determined by simulations according to the overall form of the device. The four 5 GHz cavities are arranged to propose a radiation pattern diversity so as for example to propose a complementary radiation pattern in the horizontal plane of the device. Higher MIMO order can be addressed with this arrangement by adding slot aperture on the same device edge (between current 5GHz antennas in each corner), or by creating additional aperture in this first part of the metal housing. The cavity 115 is dedicated to 2.4GHz. The principles described above apply for this cavity.

**Figure 2B** illustrates a perspective view of the spacer. The spacer 120 comprises multiple cuts and openings in the dielectric. Cuts 121A, 122A, 123A, 124A are arranged to support the antenna feeder. Cuts 121B, 121C, 122B, 122C, 123B, 123C, 124B, 124C are arranged to insert the top housing and are particularly adapted to fit to the walls integrated into the top housing. Optionally, holes 125A, 125B are arranged to allow insertion of the top housing and to provide guidance for positioning and maintaining the spacer towards the top housing.

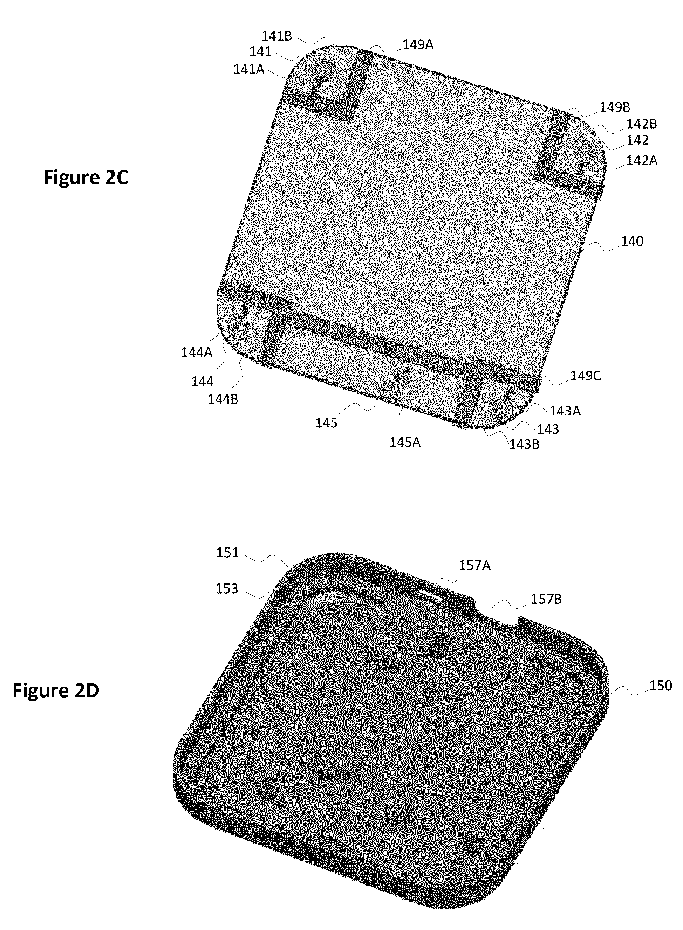

**Figure 2C** illustrates a perspective view of the printed circuit board. The printed circuit board 140 hosts the electronic components that provide the functionality of the device. These components are not shown in the figure. It comprises conductor pads 141, 142, 143, 144, 145 allowing the contact of an antenna feeder (not represented) to the slot antenna, and antenna driving circuits 141A, 142A, 143A, 144A, 145A. The cavity areas 141B, 142B, 143B, 144B use filled conductor and plated through holes may be added to increase the energy transfer from the printed circuit board to the antenna. Ground planes 149A, 149B, 149C are arranged on the top layer of the printed circuit board, coating-free, to ensure good ground connection with the walls of the top cover. Indeed electric contacts between the printed circuit board and the walls of the top cover ensure an electromagnetic sealing of the cavity. The contact points between the printed circuit board and the wall of the top housing are distant by less than a quarter of the wavelength and preferably the contacts are nearly continuous, for example through the use of metallic foam. The person skilled in the art will appreciate that several solutions may be used to ensure the electrical connection between the wall of the top cover and the ground plane on the printed circuit board such as spring contacts, solder paste, or metallic foam.

**Figure 2D** illustrates a perspective view of the bottom housing. The vertical part 151 and the horizontal part 153 of the bottom housing 150 form the third part of the cavities for each of the backed cavity antennas. Indeed, the horizontal part is required to close the cavity since the printed circuit board does not fit perfectly to the vertical part: some free space needs to be provisioned around the printed circuit board to allow its assembly. Optionally, holes 155A, 155B, 155C are used to fix the printed circuit board onto the bottom housing 150 and holes 157A, 157B are used to interface the device with external elements by connecting cables or devices, such as DC power unit, HDMI, USB, USB-C, etc. Optionally, the bottom housing can also integrate walls similar to the walls integrated to the top housing in order to further improve the isolation of the cavities.

The person skilled in the art will appreciate that other arrangements of the different elements composing the device are possible. For example, when the device is standing up (being mostly vertical and not mostly horizontal as described in figure 1A), the top and bottom housings are replaced by left and right housings or front and rear housings, without altering the principle of the invention. The position of the antennas can also be changed with minor impact of the performances. For example, the 5 GHz antennas could be placed in the middle of each side of the device and the 2.4 GHz antenna could be placed in a corner of the device. Any other number of (slot or patch) antennas could be used. For example, doubling the number of antennas of the preferred embodiment using 8 antennas for the 5 GHz and 2 for the 2.4 GHz, the antennas being distributed over the sides, corner, and top of the housing.

**Figure 3A** illustrates a perspective view of a wireless communication device 300 according to an alternate embodiment without spacer and integrating four 5 GHz antennas. In this embodiment, there is no spacer between the top housing and the bottom housing therefore forming a full metal housing. Each slot antenna 301, 302, 303, 304 is realized by a slot in the metal housing, the opening being made either by using die casting or machining techniques. This slot antenna uses similar cavities than those described in the preferred embodiment and therefore all principles described above apply to this alternate embodiment. For example, the slot may be left opened (air filled zone) or filled with dielectric material.

**Figure 3B** illustrates a perspective view of a wireless communication device 310 according to an alternate embodiment where fake slots 315, 316 are inserted for aesthetical reasons. In this case, only the slots 311, 312, 313, 314 are used as slot antennas. The other slots have identical aspect but have no associated slot antenna function.

**Figure 3C** illustrates a perspective view of a wireless communication device 320 according to an alternate embodiment where fake slots 325, 326 with different aspects are inserted for aesthetical reasons. In this case, only the slots 321, 322, 323, 324 are used as slot antennas. The other slots, either with identical aspect such as slot 325 or with different aspects such as slot 326, have no associated slot antenna function.

**Figure 3D** illustrates a perspective view of a wireless communication device 330 according to an alternate embodiment where slot antennas are replaced by patch antennas. In this embodiment, for each patch, the openings in the metal housing comprise two openings: one in "C" shape and the other in inverted "C" shape, as highlighted by the dotted square. This shape forms a pattern that is replicated all over the housing. Some of these shapes are active and have an associated patch antenna function while others (patch 335, 336) are inserted only for aesthetical reasons and have no associated antenna function. The pattern may be implemented on a single plane (a surface of the housing like the patch antenna 332), on two planes (a border of the housing like the patch antenna 331, 333, 334) or on three planes (on a corner of the housing, not illustrated). The openings may be left opened (air filled zone) or filled with dielectric material. The principles related to the cavities also apply to this kind of antenna.

The metal housing can advantageously be used for heat dissipation of the electronic components. In figure 2A, the square protuberance 119 on the top housing is a contact area for the processor of the device and is used to transfer heat from the processor to the metal housing. The assembly of the elements ensures that the top surface of the processor is physically in contact with this square protuberance. A thermal paste is preferably used to improve the heat transfer.

**Figure 5** illustrates a cavity-backed patch antenna integrated in a metal casing, according to an embodiment of the present disclosure. The cavity-backed patch antenna comprises a cavity 52 (of substantially parallelepiped shape, in the shown example), a bended patch 55/57 defined by two radiating apertures 59a, 59b, and an antenna feeder 53 used for coupling the signal between a PCB 54 and the patch.

An element of dielectric material 56 (e.g. an over-molded plastic element) is configured for filling the radiating apertures 59a, 59b and/or at least part of the cavity 52, thus allowing reducing the electrical length of the radiating apertures. In a particular embodiment, the over-molded plastic element 56 is part of the spacer 120 (see figure 1B) positioned between the top housing 110 and the bottom housing 150 when they are mounted together.

The cavity-backed patch antenna can comprise other elements not shown in figure 5, e.g. spring contacts, foam metal belt or conductive glue belt between the PCB and the metal housing.

More particularly, in the present embodiment, the bended patch is a bended stacked patch 55/57 comprising a first bended metallic patch 55 (parasitic patch), which is part of the metal housing 51 (top housing and/or bottom housing), and a second bended patch 57 (also called driven patch), which is under the parasitic patch (and is bended as the parasitic patch). The use of a stacked patch allows to increase the impedance frequency bandwidth of the cavity-backed patch antenna. However the proposed solution also applies with a single (non-stacked) patch.

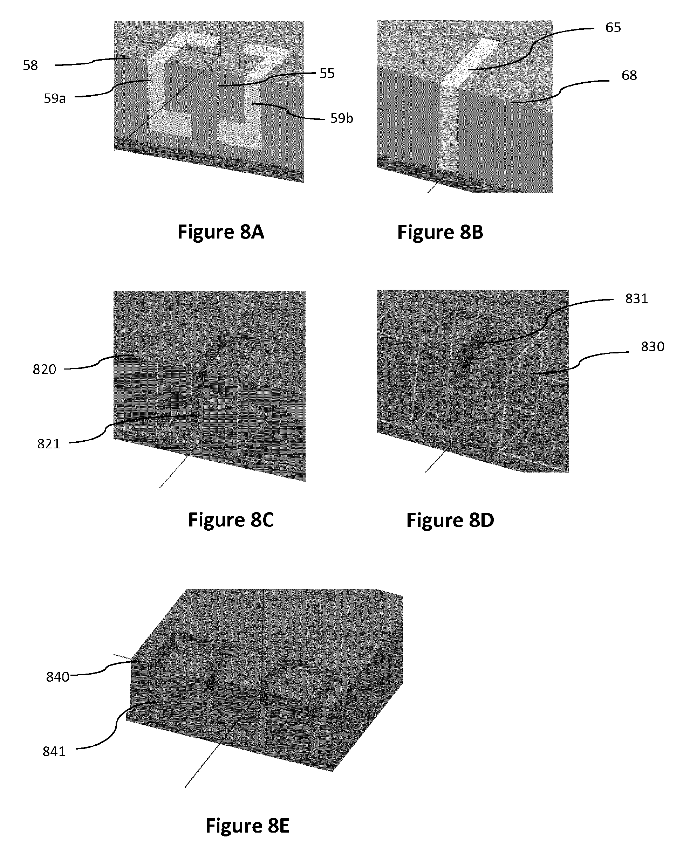

In this particular embodiment, the two radiating apertures 59a, 59b defining the bended stacked patch 55/57 have a bended pattern resulting from a bending of a "double C shape" planar pattern, i.e. a planar pattern comprising a first radiating aperture 59b of "C" shape and a second radiating aperture 59b of inverted "C" shape (see also figure 3D and figure 8A).

The bended pattern is non-planar and is implemented on two orthogonal planes (vertical and horizontal planes), along a border 58 of the housing 51. In other words, the bended pattern stacked patch 55/57 extends on two faces of the metallic housing 51, located on two sides of a edge (border) 58 of the metallic housing. In an alternate embodiment, the bended pattern is implemented on two non-orthogonal planes of the housing. According to a particular feature, the bended pattern (and therefore also the bended patch) is bended in the middle of its length. In another alternate embodiment, the bended pattern is implemented on three planes, on a corner of the housing.

The general principle of the aforesaid different embodiments consists in that the bended patch radiates in at least two different directions (the electric field is split in these at least two different directions). In the example of figure 5, the bended patch 55/57 radiates in both vertical and horizontal directions and has a smaller peak directivity than the planar patch 45/47 of the example shown in figure 4.

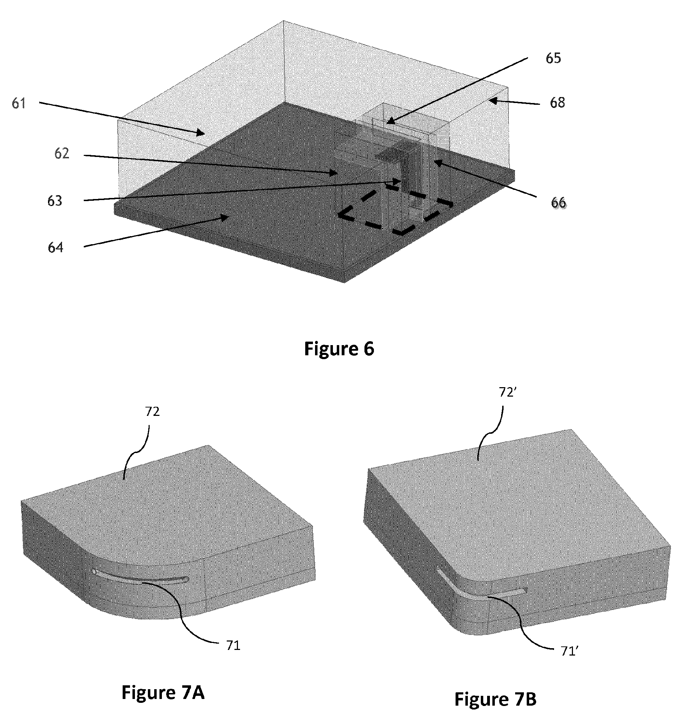

In the embodiment shown in figure 5, the bended patch 55/57 is bended according to a substantially right angle. In other embodiments, it can be bended according to a rounded fold (see below the corresponding discussion in the case of a bended slot, in connection with figures 7A and 7B).

**Figure 6** illustrates a cavity-backed slot antenna integrated in a metal casing, according to an embodiment of the present disclosure. The cavity-backed slot antenna comprises a cavity 62 (of substantially parallelepiped shape, in the shown example), a bended slot 65 (which is part of the metal housing 61: top housing and/or bottom housing) and an antenna feeder 63 used for coupling the signal between a PCB 64 and the slot 65.

An element of dielectric material 66 (e.g. an over-molded plastic element) is configured for filling the bended slot 65 and/or at least part of the cavity 62, thus allowing reducing the electrical length of the radiating apertures. In a particular embodiment, the over-molded plastic element 66 is part of the spacer 120 (see figure 1B) positioned between the top housing 110 and the bottom housing 150 when they are mounted together.

The cavity-backed slot antenna can comprise other elements not shown in figure 6, e.g. spring contacts, foam metal belt or conductive glue belt between the PCB and the metal housing.

More particularly, in the present embodiment, the bended slot has a bended pattern resulting from a bending of an "I shape" planar pattern (see also figures 3A to 3C and figure 8B).

The bended pattern is non-planar and is implemented on two orthogonal planes (vertical and horizontal planes), along a border 68 of the housing 61. In an alternate embodiment, the bended pattern is implemented on two non-orthogonal planes of the housing. According to a particular feature, the bended pattern (and therefore also the bended patch) is bended in the middle of its length. In another alternate embodiment, the bended pattern is implemented on three planes, on a corner of the housing.

The general principle of the aforesaid different embodiments consists in that the bended slot radiates in at least two different directions.

In the embodiment shown in figure 6, the slot 65 is bended according to a substantially right angle. As shown in **figures 7A and 7B****,** in other embodiments, the slots 71, 71' are bended according to a rounded fold, in the corner of the metal housing 72, 72'. Thus, these bended slots also 71, 71' radiate in at least two different directions.

**Figures 8A to 8E** illustrate different slot or patch patterns according to alternate embodiments of the present disclosure.

In figure 8A, and as already disclosed above (see figure 5), the two radiating apertures 59a, 59b defining the bended stacked patch have a bended pattern resulting from a bending of a "double C shape" planar pattern (i.e. a planar pattern comprising a first radiating aperture 59a of "C" shape and a second radiating aperture 59b of inverted "C" shape). The bended pattern is implemented on two orthogonal planes (vertical and horizontal planes), along a border 58 of the housing.

In figure 8B, and as already disclosed above (see figure 6), the bended slot is a radiating aperture having a bended pattern resulting from a bending of an "I shape" planar pattern. The bended pattern is implemented on two orthogonal planes (vertical and horizontal planes), along a border 68 of the housing.

In figure 8C, the bended slot 821 is a radiating aperture having a bended pattern resulting from a bending of a "S shape" planar pattern. The bended pattern is implemented on two orthogonal planes (vertical and horizontal planes), along a border 820 of the housing.

In figure 8D, the bended slot 831 is a radiating aperture having a bended pattern resulting from a bending of an inverted "C" shape planar pattern. The bended pattern is implemented on two orthogonal planes (vertical and horizontal planes), along a border 830 of the housing.

In figure 8E, the bended slot 841 is a radiating aperture having a bended pattern resulting from a bending of a meandered shape planar pattern. The bended pattern is implemented on two orthogonal planes (vertical and horizontal planes), along a border 840 of the housing.

Although the present disclosure has been described with reference to one or more examples, workers skilled in the art will recognize that changes may be made in form and detail without departing from the scope of the disclosure.

Electronic device 100 can also be any other electronic device comprising an antenna as described, such as a gateway for instance.

## Claims

1. Wireless communication device (100), comprising a metallic housing (110, 150, 51, 61, 72, 72') integrating at least one cavity-backed antenna, **characterized in that** said at least one cavity-backed antenna comprises a bended patch or slot (55, 57, 65, 71, 71', 821, 831, 841) radiating in at least two different directions.

2. Wireless communication device according to claim 1, wherein said bended patch or slot is bended in the middle of the length of said bended patch or slot.

3. Wireless communication device according to any one of the claims 1 to 2, wherein said bended patch or slot is bended according to a substantially right angle or according to a rounded fold.

4. Wireless communication device according to any one of the claims 1 to 3, wherein said bended patch or slot extends on two faces of the metallic housing, located on two sides of an edge (58, 68, 820, 830, 840) of the metallic housing.

5. Wireless communication device according to any one of the claims 1 to 4, wherein said at least two different directions comprise at least two orthogonal directions.

6. Wireless communication device according to any one of the claims 1 to 5, wherein said bended patch or slot is defined by at least one opening having a bended pattern resulting from a bending of a planar pattern belonging to the group comprising: double C shape (59a, 59b), I shape (65), S shape (821), C shape, inverted C shape (831) and meandered shape (841).

7. Wireless communication device according to any one of the claims 1 to 6, wherein said bended patch or slot is defined by at least one opening filled with a dielectric material (56, 66).

8. Wireless communication device according to any one of the claims 1 to 7, wherein said metallic housing integrates a plurality of cavity-backed antennas of a multiple-input multiple-output system, each of said plurality of cavity-backed antennas comprising a bended patch or slot radiating in at least two different directions.

9. Wireless communication device (100) according to any of the previous claims **characterized in that** it is a set-top box or a gateway.
